# EUROPEAN PATENT APPLICATION

(11) **EP 3 345 962 A1**
(43) Date of publication of application: **11.07.2018**
(21) Application number: 16841231.0
(22) Date of filing: 13.06.2016
(51) Int. Cl.: C08L 21/00, C08K 3/04, C08K 5/01, C08K 5/03, C08K 5/13, C08L 7/00, C09J 201/00

(54) **RUBBER COMPOSITION, CEMENT COMPOSITION AND HOSE FOR LIQUID TRANSPORTATION**

(30) Priority: 02.09.2015 JP 2015172767
(71) Applicant: The Yokohama Rubber Co., Ltd., Minato-ku Tokyo 105-8685 (JP)
(72) Inventor: MORITA, Tomohiro, Hiratsuka-shi Kanagawa 254-8601 (JP)
(74) Representative: Grünecker Patent- und Rechtsanwälte PartG mbB
(86) International application number: PCT/JP2016/067500
(87) International publication number: WO 2017/038199

(57) **Abstract**

To provide: a rubber composition that can provide cement having high adhesion and having excellent solubility in a solvent and excellent tackiness; a cement composition; and a hose for liquid transportation. A rubber composition of the present invention contains 100 parts by mass of a diene rubber, from 5 parts by mass to 70 parts by mass of a carbon black, and from 3 parts by mass to 50 parts by mass of a tackifying resin having a softening point of lower than 130°C.

## Description

### Technical Field

The present invention relates to a rubber composition, a cement composition, and a hose for liquid transportation, and particularly relates to a rubber composition that can be suitably used in production of marine hoses, a cement composition, and a hose for liquid transportation.

### Background Art

Conventionally, cement compositions for producing marine hoses that are used to transport crude oil from a pipeline facility in the sea to a tanker on the sea, to transport petroleum from a tanker on the sea to a storage facility, or the like have been proposed (e.g. see Patent Document 1). In the cement compositions, cement having excellent oil resistance and tackiness and having high adhesion can be formed because the cement compositions are formed by dissolving a rubber composition containing predetermined amounts of an acrylonitrile-butadiene rubber (NBR) and a xylene resin in a solvent. Such cement facilitates bonding of an inner tube rubber layer of a hose body of a marine hose and an attaching member formed from a metal provided on the both ends of the hose body.

### Citation List

### Patent Literature

Patent Document 1: JP 2013-256618 A

### Summary of Invention

### Technical Problem

In the production steps of a marine hose, a buoyant material layer is provided by winding a sponge, to which cement for tackiness has been applied, around a cover rubber layer of a hose body. When the tackiness of the cement for tackiness is poor, workability of winding of the sponge may be deteriorated and the forming efficiency may be deteriorated as well as the used amount of the cement may be increased because repeated application of the cement may be necessary. Because of this, a cement composition that can provide cement having excellent tackiness during the sponge formation of a marine hose has been desired.

The present invention was achieved in light of such circumstances, and an object of the present invention is to provide: a rubber composition that can provide cement having high adhesion and having excellent solubility in a solvent and excellent tackiness; a cement composition; and a hose for liquid transportation.

### Solution to Problem

The rubber composition of the present invention contains 100 parts by mass of a diene rubber, from 5 parts by mass to 70 parts by mass of a carbon black, and from 3 parts by mass to 50 parts by mass of a tackifying resin having a softening point of lower than 130°C.

According to this rubber composition, because the softening point of the tackifying resin compounded in the rubber composition is lower than 130°C, the softening point of the tackifying resin becomes appropriately low and is closer to the room temperature, which is a use environment of the cement composition using the rubber composition. Because of this, the rubber composition can achieve cement having high adhesion and having excellent solubility in a solvent and excellent tackiness because the mixability of the diene rubber and the tackifying resin is enhanced during the preparation of the rubber composition.

In the rubber composition of the present invention, the tackifying resin is preferably at least one type selected from the group consisting of alkylphenol resins, petroleum resins, and aromatic modified terpene resins. By this configuration, a rubber composition having high adhesion and having even better solubility in a solvent and even better tackiness can be achieved because the softening point of the tackifying resin is within the appropriate range.

In the rubber composition of the present invention, the diene rubber is preferably a natural rubber. By this configuration, a rubber composition having high adhesion and having even better solubility in a solvent and even better tackiness can be achieved because excellent compatibility between the tackifying resin and the natural rubber is achieved.

The rubber composition of the present invention preferably further contains a vulcanization accelerator. Such a configuration further enhances the solubility of the diene rubber.

The cement composition of the present invention contains the rubber composition described above and a solvent.

According to the cement composition of the present invention, because the softening point of the tackifying resin compounded in the rubber composition contained in the cement composition is lower than 130°C, the softening point of the tackifying resin becomes appropriately low and is closer to the room temperature, which is a use environment of the cement composition. Because of this, cement having high adhesion and excellent tackiness can be achieved because the mixability of the diene rubber and the tackifying resin is enhanced during the preparation of the rubber composition, thereby enabling uniform mixing of the cement composition obtained by using the rubber composition and the solvent.

In the cement composition of the present invention, the content of the rubber composition is preferably from 5 mass% to 50 mass%, and the content of the solvent is preferably from 50 mass% to 95 mass%. By this configuration, cement having high adhesion and having even better solubility in a solvent and excellent tackiness can be achieved because the compounded amount of the rubber composition relative to the amount of the solvent is within the appropriate range.

The hose for liquid transportation of the present invention has a hose body, and a foamed member fixed to a surface of the hose body with the cement composition described above.

According to the hose for liquid transportation of the present invention, the foamed member is fixed to the hose body by applying the cement composition described above to the surface of the hose body. This enhances workability due to its excellent tackiness as well as achieve high adhesion. Because of this, manufacturing cost for repeated application of the cement composition can be reduced because peeling off of the foamed member from the hose body can be prevented and thus the hose for liquid transportation can be used stably for a long period of time.

The hose for liquid transportation of the present invention is preferably a marine hose. By this configuration, manufacturing cost of the marine hose, for repeated application of the cement composition, can be reduced because peeling off of the foamed member from the marine hose can be prevented and thus the marine hose can be used stably for a long period of time.

### Advantageous Effects of Invention

According to the present invention, a rubber composition that can provide cement having high adhesion and having excellent solubility in a solvent and excellent tackiness; a cement composition; and a hose for liquid transportation can be provided.

### Brief Description of Drawings

FIG. 1 is a schematic appearance view of a marine hose according to an embodiment of the present invention.
FIG. 2 is a cross-sectional schematic view of an end portion of a marine hose according to an embodiment of the present invention.
FIG. 3 is an explanatory diagram of a buoyant material layer of a marine hose according to an embodiment of the present invention.

### Description of Embodiments

Embodiments of the present invention are described in detail below with reference to the accompanying drawings. Note that the present invention is not limited by the embodiments described below. Furthermore, it is possible to combine the constituents of the embodiments described below as desired.

### Rubber composition

The rubber composition of the present invention contains 100 parts by mass of a diene rubber, from 5 parts by mass to 70 parts by mass of a carbon black, and from 3 parts by mass to 50 parts by mass of a tackifying resin having a softening point of lower than 130°C.

According to the rubber composition of the present invention, because the softening point of the tackifying resin compounded in the rubber composition is lower than 130°C, the softening point of the tackifying resin becomes appropriately low and is closer to the room temperature, which is a use environment of the cement composition using the rubber composition. This enhances the mixability of the diene rubber and the tackifying resin during the preparation of the rubber composition. As a result, a rubber composition that can provide cement having high adhesion and having excellent solubility in a solvent and excellent tackiness can be achieved. Note that, in the present embodiment, the softening point is a softening point of a tackifying resin measured in accordance with JIS K 6220-1:2001 (ring and ball method). Hereinafter, constituents used in the rubber composition of the present invention are described in detail below.

### Diene rubber

As the diene rubber, various diene rubbers can be used as long as the effect of the present invention can be exhibited. Examples of the diene rubber include natural rubbers (NR), isoprene rubbers, butadiene rubbers, styrene-butadiene rubbers (SBR), butyl rubbers, and the like. One type of these may be used alone, or two or more types of these may be used in a combination. Among these, from the perspectives of obtaining cement having high adhesion and having excellent solubility in a solvent and excellent tackiness, the diene rubber is preferably a natural rubber.

The compounded amount of the diene rubber is preferably from 40 mass% to 90 mass%, more preferably from 45 mass% to 85 mass%, and even more preferably from 50 mass% to 80 mass%, relative to the total mass of the rubber composition.

### Tackifying resin

Examples of the tackifying resin include resins having polar groups, such as rosin-based resins, terpene-based resins, petroleum resins, coumarone resins, styrene resins, and alkylphenol resins.

Examples of the rosin-based resin include rosin resins, hydrogenated rosin resins, modified rosin resins, disproportionated rosin resins, rosin resin esters, polymerized rosin resins, and the like.

Examples of the terpene-based resin include terpene resins, hydrogenated terpene resins, modified terpene resins, aromatic modified terpene resins, terpene phenol resins, α-pinene resins, β-pinene resins, and the like. Also, as the terpene-based resin, commercially available products of aromatic modified terpene resins (trade name: YS RESIN TO-125, available from Yasuhara Chemical Co., Ltd.) and the like can be used.

Examples of the petroleum resin include C5 petroleum resins, C9 petroleum resins, C5/C9 petroleum resins, dicyclopentadiene (DCPD) petroleum resins, and the like. Also, as the petroleum resin, for example, commercially available products of C5 petroleum resins (trade name: Hilets G-100X, manufactured by Mitsui Chemicals, Inc.; trade name: Quintone A100, available from Zeon Corporation) and the like can be used.

Examples of the coumarone resin include polymers of (1-benzofuran) coumarone, polymers of coumarone derivatives, coumarone-indene resins (copolymers of coumarone and indene), hydrogenated coumarone-indene resins, and the like.

Examples of the alkylphenol resin include phenols having an alkyl group having from 1 to 18 carbons that are obtained from cresol, isopropylphenol, t-butylphenol, amylphenol, para-octylphenol (t-octylphenol), nonylphenol, dodecylphenol, allylphenol, cyclohexylphenol, and 4,6-dioctyl resorcin; and phenol resins using various derivatives such as methylolated derivatives of these and halogenated derivatives of these. Also, as the alkylphenol resin, for example, commercially available products such as commercially available products of para-octylphenols (Hitanol 1502Z, available from Hitachi Chemical Co., Ltd.) and the like can be used.

In the rubber composition of the present invention, as the tackifying resin, one type of the tackifying resins may be used alone or two or more types of the tackifying resins may be used in combination among the tackifying resins described above as long as the softening point thereof is lower than 130°C, in the range that achieves the effect of the present invention. Because the softening point of the tackifying resin is lower than 130°C, the softening point of the tackifying resin becomes appropriately low and is closer to the room temperature, which is a use environment of the cement composition using the rubber composition. By this, a rubber composition that can provide cement having high adhesion and having excellent solubility in a solvent and excellent tackiness can be achieved because the mixability of the diene rubber and the tackifying resin is enhanced during the preparation of the rubber composition. Furthermore, when the softening point of the tackifying resin is 20°C or higher, liquefaction at room temperature is prevented and workability is enhanced. From the perspective of achieving the effects described above, the softening point of the tackifying resin is lower than 130°C, preferably from 20°C to 125°C, more preferably from 30°C to 110°C, and even more preferably from 40°C to 100°C.

From the perspective of obtaining cement having high adhesion and having excellent solubility in a solvent and excellent tackiness, the tackifying resin is preferably at least one type selected from the group consisting of alkylphenol resins, petroleum resins, and aromatic modified terpene resins, more preferably at least one type selected from the group consisting of para-octylphenol resins, petroleum resins, and aromatic modified terpene resins, and particularly preferably a para-octylphenol resin. Use of alkylphenol as the tackifying resin enhances interaction between the alkyl group which is a non-polar group and the diene rubber. This makes it possible to enhance the solubility of the diene rubber by the tackifying resin.

From the perspective of obtaining cement having high adhesion and having excellent solubility in a solvent and excellent tackiness, the compounded amount of the tackifying resin is preferably from 2.5 parts by mass to 100 parts by mass, more preferably from 3 parts by mass to 50 parts by mass, and even more preferably from 5 parts by mass to 15 parts by mass, per 100 parts by mass of the diene rubber.

Furthermore, from the perspective of obtaining cement having high adhesion and having excellent solubility in a solvent and excellent tackiness, the compounded amount of the tackifying resin is preferably from 4.0 mass% to 9 mass%, more preferably from 4.5 mass% to 8.5 mass%, and even more preferably from 5.0 mass% to 8.0 mass%, relative to the total mass of the rubber composition.

The rubber composition of the present invention may contain, besides the components described above, cross-linking agents, such as vulcanization agents, vulcanization accelerators, and vulcanization aids, and/or vulcanization retarders and, as necessary, may contain various compounding agents as long as the object of the present invention is not impaired.

Examples of the vulcanizing agent include vulcanizing agents, such as sulfur-based vulcanizing agents, metal oxide-based vulcanizing agents, organic peroxide-based vulcanizing agents, phenol resins, and quinone dioxime. Examples of the sulfur-based vulcanizing agent include powdered sulfur, precipitated sulfur, highly dispersible sulfur, surface treated sulfur, insoluble sulfur, dimorpholine disulfide, alkylphenol disulfide, and the like. Furthermore, examples of other vulcanization agents include zinc oxide, magnesium oxide, litharge, p-quinone dioxime, p-dibenzoylquinone dioxime, poly-p-dinitrosobenzene, methylenedianiline, and the like.

Examples of the vulcanization accelerator include aldehyde/ammonia-based, guanidine-based, thiourea-based, thiazole-based, sulfenamide-based, thiuram-based, and dithiocarbamate-based vulcanization accelerators. Examples of the aldehyde/ammonia-based vulcanization accelerator include hexamethylene tetramine (H) and the like. Examples of the guanidine-based vulcanization accelerator include diphenylguanidine and the like. Examples of the thiourea-based vulcanization accelerator include ethylene thiourea and the like. Examples of the thiazole-based vulcanization accelerator include dibenzothiazyl disulfide (DM), 2-mercaptobenzothiazole, 2-(N,N-diethylthiocarbamoylthio)benzothiazole (64), the Zn salts thereof, and the like. Examples of the sulfenamide-based vulcanization accelerator include N-cyclohexyl-2-benzothiazolyl sulfenamide (CZ), N-t-butyl-2-benzothiazolyl sulfenamide (NS), and the like. Examples of the thiuram-based vulcanization accelerator include tetramethylthiuram disulfide (TMTD), dipentamethylenethiuram tetrasulfide, and the like. Examples of the dithiocarbamate-based vulcanization accelerator include Na-dimethyldithiocarbamate, Zn-dimethyldithiocarbamate, Te-diethyldithiocarbamate, Cu-dimethyldithiocarbamate, Fe-dimethyldithiocarbamate, pipecolin pipecolyldithiocarbamate, and the like. Among these, from the perspective of enhancing solubility of diene rubber, the vulcanization accelerator is preferably thiazole-based and sulfenamide-based vulcanization accelerators, and more preferably a sulfenamide-based vulcanization accelerator.

Also, as the vulcanization accelerator, for example, commercially available products of thiazole-based vulcanization accelerators (trade name: NOCCELER 64, available from Ouchi Shinko Chemical Industrial Co., Ltd.), commercially available products of sulfenamide-based vulcanization accelerators (trade name: NOCCELER CZ, available from Ouchi Shinko Chemical Industrial Co., Ltd.) and the like can be used.

A conventional auxiliary for rubber can be used together as a vulcanization aid. Examples of the vulcanization aid include stearic acid, oleic acid, Zn salts of these, and the like.

Examples of the vulcanization retarder include organic acids, such as phthalic anhydride, benzoic acid, salicylic acid, and acetylsalicylic acid; nitroso compounds, such as N-nitroso-diphenylamine, N-nitroso-phenyl-β-naphthylamine, and N-nitroso-trimethyl-dihydroquinoline polymers; halides, such as trichloromelanine; 2-mercaptobenzimidazole, Santogard PVI, and the like.

Examples of the compounding agents include reinforcing agents (fillers), anti-aging agents, antioxidants, plasticizers, thixotropic agents, UV absorbents, solvents, surfactants (including leveling agents), dispersants such as carbon black, dehydrating agents, anticorrosive agents, adhesion promoters, antistatic agents, reactive diluents, curing catalysts, pigments, dyes, drying oil, and the like. For these compounding agents, agents generally used for a rubber composition may be used. The compounding amounts of such compounding agents are not particularly limited and can be selected as appropriate.

As the carbon black, for example, HAF grade carbon blacks and ISAF grade carbon blacks can be used. Among these, HAF grade carbon blacks are preferable, HAF-LS grade carbon blacks and HAF grade carbon blacks are more preferable, and HAF-LS grade carbon blacks are even more preferable. Furthermore, the carbon black has an iodine adsorption amount of preferably 5 mg/g to 180 mg/g, more preferably 5 mg/g to 100 mg/g, even more preferably 30 mg/g to 100 mg/g, and yet even more preferably 50 mg/g to 100 mg/g. Note that, in the present specification, the iodine adsorption amount of the carbon black is measured in accordance with JIS K 6217-1:2008. Also, as the carbon black, for example, commercially available products of HAF-LS grade carbon blacks (trade name: N326, available from NSCC Carbon Co., Ltd.) and commercially available products of HAF grade carbon blacks (trade name: N330, available from NSCC Carbon Co., Ltd.) can be used. The compounded amount of the carbon black is from 5 parts by mass to 70 parts by mass, preferably from 10 parts by mass to 65 parts by mass, and more preferably from 15 parts by mass to 60 parts by mass.

The method of producing the rubber composition of the present invention is not particularly limited, and the rubber composition may be produced by a conventionally known method. The rubber composition of the present invention can be obtained by, for example, kneading the diene rubber, the tackifying resin and, optionally, as desired, various compounding agents to be contained using a Banbury mixer, a roll, or the like.

### Cement composition

The cement composition of the present invention contains the rubber composition according to the embodiment described above and a solvent.

According to the cement composition of the present invention, because the softening point of the tackifying resin compounded in the rubber composition contained in the cement composition is lower than 130°C, the softening point of the tackifying resin becomes appropriately low and is closer to the room temperature, which is a use environment of the cement composition. Because of this, a rubber composition that can provide cement having high adhesion and excellent tackiness can be achieved because the mixability of the diene rubber and the tackifying resin is enhanced during the preparation of the rubber composition. This enables uniform mixing of the cement composition obtained by using the rubber composition and the solvent.

Furthermore, from the perspective of obtaining cement having high adhesion and having excellent solubility of the rubber composition in a solvent and excellent tackiness, the compounded amount of the rubber composition is preferably from 5 mass% to 50 mass%, more preferably from 7.5 mass% to 30 mass%, and even more preferably from 10 mass% to 20 mass%, relative to the total mass of the rubber composition.

The solvent is not particularly limited as long as the solvent can dissolve the rubber composition, and examples thereof include acetone, methyl ethyl ketone, methyl isobutyl ketone, toluene, xylene, rubber solvents, and the like. One type of these solvents may be used alone, or two or more types of these solvents may be used in a combination. Among these, from the perspectives of excellent solubility of the rubber composition and excellent storage stability of the solvent, the solvent is preferably a rubber solvent.

From the perspective of obtaining cement having high adhesion and having excellent solubility of the rubber composition and excellent tackiness, the compounded amount of the solvent is preferably from 300 parts by mass to 1500 parts by mass, more preferably from 500 parts by mass to 1000 parts by mass, and even more preferably from 600 parts by mass to 800 parts by mass, per 100 parts by mass of the rubber composition.

Furthermore, from the perspective of obtaining cement having high adhesion and having excellent solubility of the rubber composition and excellent tackiness, the compounded amount of the solvent is preferably from 50 mass% to 95 mass%, more preferably from 70 mass% to 92.5 mass%, and even more preferably from 80 mass% to 90 mass%, relative to the total mass of the rubber composition.

The method of producing the cement composition of the present invention is not particularly limited, and the cement composition may be produced by a conventionally known method. The cement composition of the present invention can be obtained by, for example, kneading the rubber composition and the solvent described above using a Banbury mixer, a roll, or the like.

The cement composition of the present invention can be used to adhere a foamed material, such as sponge, which is an adherend, and a rubber layer as well as to adhere foamed materials. This cement composition makes it possible to adhere foamed materials by applying this cement composition to a foamed material which is an adherend or on a rubber layer and then heating as needed.

As described above, according to the cement composition of the present invention, high adhesive performance between foamed materials and between a foamed material and a rubber layer can be achieved by forming cement by applying the cement composition to the surface of the foamed material which is an adherend because the cement composition can exhibit high adhesion and excellent tackiness. Because of this, when the cement composition of the present invention is used as cement of a marine hose or the like, stable use for a long period of time is possible because excellent adhesive performance can be achieved.

### Hose for liquid transportation

The hose for liquid transportation that uses the cement composition of the present invention is described below. Note that, in the description below, an example in which the cement composition of the present invention is used in a marine hose is described. However, the cement composition of the present invention is applicable for various hoses for liquid transportation besides marine hoses.

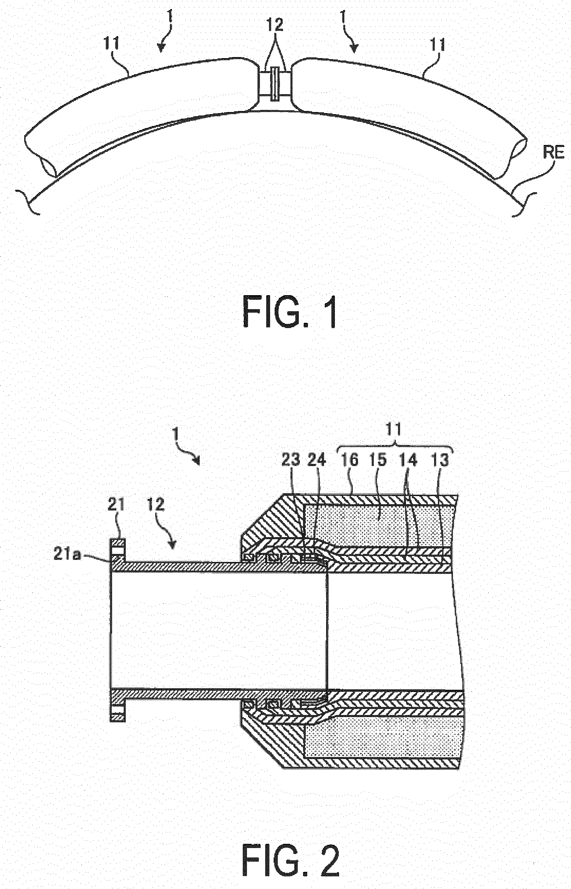

FIG. 1 is a schematic appearance view of a marine hose 1 according to the present invention. As illustrated in FIG. 1, the marine hose 1 of the present invention is used as a hose for liquid transportation to transport crude oil between a tanker and a tank by connecting the tanker anchoring on the sea and the storage facility, such as a tank, on the land. The marine hose 1 is installed as a reel winding type in a floating production storage and offloading (FPSO) unit of petroleum and gas. Furthermore, when not used, the marine hose 1 is stored under a condition that a plurality of the marine hoses 1 are connected and wound around a cylindrical reel. This marine hose 1 is used under a condition that a plurality of marine hoses 1 are connected via attaching members 12 provided on the both end portions of hose body portions 11 of the marine hoses 1. Furthermore, the marine hoses 1 are stored on a tanker or on the land in a condition that the plurality of the marine hoses 1, which are connected each other, are wound around a cylindrical reel RE when the marine hoses 1 are not used.

FIG. 2 is a cross-sectional schematic view of an end portion of the marine hose 1 according to the present invention. As illustrated in FIG. 2, the marine hose 1 has a substantially cylindrical hose body 11 with flexibility and attaching members 12 provided on the both end portions of the hose body 11. The attaching member 12 has a substantially cylindrical shape, and the attaching member 12 is fixed to an end portion of the hose body 11 at one end side of the attaching member 12 and the attaching member 12 is arranged on the outside of the hose body 11 at the other end side of the attaching member 12.

The hose body 11 has an inner tube rubber layer 13 having a substantially cylindrical shape, a pressure resistant cord layer 14 having two layers and being provided on the inner tube rubber layer 13, a buoyant material layer 15 provided on the pressure resistant cord layer 14, and a cover rubber layer 16 provided on the buoyant material layer 15. The cover rubber layer 16 covers the outer circumferential surface of the hose body 11 by covering the surface of the buoyant material layer 15.

The hose body 11 is, for example, formed so that the inner diameter is approximately 500 mm (20 in) and the outer diameter is approximately 1000 mm.

The inner tube rubber layer 13 is formed from a rubber material having oil resistance, such as NBR. The pressure resistant cord layer 14 is a rubber sheet which has oil resistance and in which cords formed from polyester, nylon, metal, or the like are arranged. The buoyant material layer 15 is formed with a sponge-like foamed member, such as foamed polyethylene and foamed urethane, to impart buoyancy to the hose body 11 in the sea. The buoyant material layer 15 is adhered on the pressure resistant cord layer 14 by providing a cement layer on the surface by applying the cement composition of the present embodiment to the surface. The cover rubber layer 16 is formed from a rubber component such as SBR, CR, and NR.

The attaching member 12 has a substantially cylindrical shape, and is composed of members made of metals, such as iron. The attaching member 12 is connected to the hose body 11 at the end of the attaching member 12. The attaching member 12A is provided with a flange 21 on the other end of the attaching member 12A. The flange 21 is provided with a plurality of bolt holes 21a by which the attaching member 12 of the marine hose 1 and an attaching member 12 of another marine hose 1 are fixed with a joining member such as a bolt.

A primer layer 23 formed by using a solution containing a phenol resin is provided on the portion, which is connected to the end portion of the hose body 11, of the attaching member 12. A cement layer 24 formed by using the cement composition is provided on the primer layer 23. By providing the primer layer 23 and the cement layer 24, the adhesion between the surface of the metal attaching member 12 and the inner tube layer 13 of the rubber hose body 11 is enhanced, and thus the adjacent marine hose 1 can be connected.

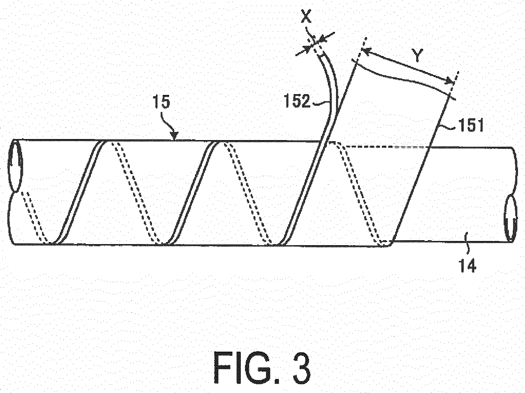

FIG. 3 is an explanatory diagram of a buoyant material layer 15 of the marine hose 1 according to the present invention. The buoyant material layer 15 has a band-like foamed member 151 wound spirally around the pressure resistant cord layer 14 in the axial direction of the hose body 11, and a ribbon-like non-foamed material 152 provided in between the foamed member 151. Note that it is not necessary to provide the non-foamed material 152. The material of the foamed member 151 is not particularly limited as long as it is a flexible material containing air bubbles, and is preferably a sponge of natural rubber. Furthermore, the material of the non-foamed material 152 is not particularly limited as long as it is a flexible non-foamed material, and is preferably a vulcanized rubber, a flexible resin, or the like. As described above, the band-like foamed member 151 and the ribbon-like non-foamed material 152 are wound side by side and spirally in the axial direction of the hose body 11. As a result, the ribbon-like non-foamed material 152 can be supported so that the compressive deformation of the band-like foamed member 151 is suppressed in high pressure in deep water. By this, the deformation can be prevented while no wrinkles are formed on the outer circumferential surface of the hose body 11, and thus attaching operation of the float in the sea is facilitated. Furthermore, according to the present embodiment, the foamed member 151 is wound under a condition that the cement composition having excellent tackiness is applied to the surfaces of the foamed member 151 and the pressure resistant cord layer 14. As a result, workability during the formation of the buoyant material layer 15 is enhanced.

The width X of the ribbon-like non-foamed material 152 needs to be in a range that prevents extreme compressive deformation while the cushioning action due to the foamed member 151 is not impaired. For example, the width X is 0.04 times to 0.25 times the width Y of the band-like foamed member 151.

As described above, according to the marine hose 1 of the embodiment described above, because the foamed member 151 is fixed to the hose body 11 by applying the cement composition of the embodiment described above to the surfaces of the pressure resistant cord layer 14 and the buoyant material layer 15 of the hose body 11, workability is enhanced due to its excellent tackiness as well as high adhesion is achieved. Because of this, manufacturing cost for repeated application of the cement composition can be reduced because peeling off of the buoyant material layer 15 from the hose body 11 can be prevented and thus the marine hose 1 can be used stably for a long period of time.

### Examples

The present invention is described below in further detail with reference to the examples and comparative examples performed in order to clearly show the effect of the present invention. Note that the present invention is not limited by the examples and comparative examples described below.

### Example 1

### Production of cement composition

A rubber composition was prepared by mixing 100 parts by mass of a diene rubber (natural rubber (NR); trade name: SIR-20, available from PT. Nusira), 10 parts by mass of a para-octylphenol resin (trade name: Hitanol 1502Z, available from Hitachi Chemical Co., Ltd.) as the tackifying resin, 45 parts by mass of a carbon black (trade name: N330, available from NSCC Carbon Co., Ltd.), 1.58 parts by mass of sulfur (trade name: oil-treated sulfur, available from Hosoi Chemical Industry Co., Ltd.), and 1.5 parts by mass of a sulfenamide-based vulcanization accelerator (trade name: NOCCELER CZ, available from Ouchi Shinko Chemical Industrial Co., Ltd.). All of the obtained rubber composition was then mixed with 1190.1 parts by mass of a rubber solvent (trade name: LA rubber solvent, manufactured by JX Nippon Oil & Energy Corporation) to prepare a cement composition. Using the obtained cement composition, solubility evaluation, tackiness evaluation, and adhesion evaluation were performed. The composition of the cement composition is shown in Table 1 below.

### Softening point of tackifying resin

For the tackifying resin used in Example 1, the measurement result of the softening point obtained in accordance with JIS K 6220-1:2001 (ring and ball method) is shown in Table 1 below.

### Solubility evaluation

The solubility of the rubber composition after the rubber composition obtained in Example 1 and the rubber solvent were stirred at room temperature (20°C to 30°C) for 1 hour was visually observed and evaluated. Evaluation criteria are shown below. The results are shown in Table 1 below.
Good: No insoluble matter observed
Poor: Insoluble matter observed

### Tackiness evaluation

The cement composition obtained in Example 1 was applied to a natural rubber-based sponge sheet (apparent specific gravity: 0.15 g/cm³; hardness (25% compressive load): 7.8 N/cm²) as the foamed member having a thickness of 2 mm and dried. Thereafter, the obtained sponge sheet was wound around an iron ring, and then the tack value was measured using a tack tester (model: Ticma-Tack Tester, available from Toyo Seiki Seisaku-sho, Ltd.), and the tackiness of the cement composition was evaluated based on the following criteria. Evaluation criteria are shown below. The results are shown in Table 1 below.
Good: Tack value was 400 or greater
Poor: Tack value was less than 400

### Adhesion evaluation

The cement composition obtained in Example 1 was applied to a natural rubber-based sponge sheet (apparent specific gravity: 0.15 g/cm³; hardness (25% compressive load): 7.8 N/cm²) as the foamed member having a thickness of 2 mm and dried. Then, a rubber sheet (natural rubber-based sulfur vulcanized rubber composition) was laminated to obtain a laminate. Thereafter, the obtained laminate was heated with vapor to vulcanize the cement composition, thereby adhering the natural rubber-based sponge sheet and the rubber sheet. Thereafter, the natural rubber-based sponge sheet was peeled off from the rubber sheet, and the area of the natural rubber-based sponge sheet remained on the rubber sheet surface was visually observed and evaluated. Evaluation criteria are shown below. The results are shown in Table 1 below.
Good: Material failure occurred in the natural rubber-based sponge
Poor: A part of the natural rubber-based sponge was peeled off

### Example 2

The rubber composition and the cement composition were evaluated in the same manner as in Example 1 except for replacing the para-octylphenol resin with 10 parts by mass of a C5 petroleum resin (1,3-pentadiene) (trade name: Hilets G-100X, available from Mitsui Chemicals, Inc.). The compounded amounts of the components and the evaluation results are shown in Table 1 below.

### Example 3

The rubber composition and the cement composition were evaluated in the same manner as in Example 1 except for replacing the para-octylphenol resin with 10 parts by mass of an aromatic modified terpene resin (trade name: YS RESIN TO125, available from Yasuhara Chemical Co., Ltd.). The compounded amounts of the components and the evaluation results are shown in Table 1 below.

### Example 4

The rubber composition and the cement composition were evaluated in the same manner as in Example 1 except for changing the compounded amount of the para-octylphenol resin to 50 parts by mass. The compounded amounts of the components and the evaluation results are shown in Table 1 below.

### Example 5

The rubber composition and the cement composition were evaluated in the same manner as in Example 1 except for changing the compounded amount of the carbon black to 20 parts by mass. The compounded amounts of the components and the evaluation results are shown in Table 1 below.

### Example 6

The rubber composition and the cement composition were evaluated in the same manner as in Example 1 except for changing the compounded amount of the carbon black to 60 parts by mass. The compounded amounts of the components and the evaluation results are shown in Table 1 below.

### Comparative Example 1

The rubber composition and the cement composition were evaluated in the same manner as in Example 1 except for replacing the para-octylphenol resin with 10 parts by mass of a rosin-modified phenol (trade name: SUMILITERESIN PR-12603, available from Sumitomo Bakelite Co., Ltd.), replacing the sulfenamide-based vulcanization accelerator with a thiazole-based vulcanization accelerator (trade name: NOCCELER 64, available from Ouchi Shinko Chemical Industrial Co., Ltd.), and changing the carbon black to trade name: N326, available from NSCC Carbon Co., Ltd. The compounded amounts of the components and the evaluation results are shown in Table 1 below.

### Comparative Example 2

The rubber composition and the cement composition were evaluated in the same manner as in Example 1 except for replacing the para-octylphenol resin with 10 parts by mass of a terpene phenol resin (trade name: YS POLYSTER T130, available from Yasuhara Chemical Co., Ltd.). The compounded amounts of the components and the evaluation results are shown in Table 1 below.

### Comparative Example 3

The rubber composition and the cement composition were evaluated in the same manner as in Example 2 except for changing the compounded amount of the C5 petroleum resin to 2 parts by mass. The compounded amounts of the components and the evaluation results are shown in Table 1 below.

**[Table 1]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Diene rubber | 100 | 100 | 100 | 100 | 100 | 100 | 100 | 100 | 100 |
| Resin A | 10 | | | 50 | 10 | 10 | | | |
| Resin B | | 10 | | | | | | | 2 |
| Resin C | | | 10 | | | | | | |
| Resin D | | | | | | | 10 | | |
| Resin E | | | | | | | | 10 | |
| Carbon black A | 45 | 45 | 45 | 45 | 20 | 60 | | 45 | 45 |
| Carbon black B | | | | | | | 45 | | |
| Sulfur | 1.58 | 1.58 | 1.58 | 1.58 | 1.58 | 1.58 | 1.58 | 1.58 | 1.58 |
| Vulcanization accelerator A | | | | | | | 1.5 | | |
| Vulcanization accelerator B | 1.5 | 1.5 | 1.5 | 1.5 | 1.5 | 1.5 | | 1.5 | 1.5 |
| Rubber solvent | 1190.1 | 1190.1 | 1190.1 | 1190.1 | 1190.1 | 1190.1 | 1190.1 | 1190.1 | 1190.1 |
| Softening point of resin | 100 | 100 | 125 | 100 | 100 | 100 | 133 | 130 | 100 |
| Solubility evaluation | Good | Good | Good | Good | Good | Good | Poor | Good | Good |
| Tackiness evaluation | Good (680) | Good (450) | Good (420) | Good (750) | Good (690) | Good (640) | Poor (350) | Poor (300) | Poor (315) |
| Adhesion evaluation | Good | Good | Good | Good | Good | Good | Good | Good | Good |

The components listed in Table 1 above are described below.
- Diene rubber: natural rubber (NR), trade name: SIR-20, available from PT. Nusira
- Resin A: para-octylphenol resin (trade name: Hitanol 1502Z, available from Hitachi Chemical Co., Ltd.)
- Resin B: C5 petroleum resin (1,3-pentadiene) (trade name: Hilets G-100X, available from Mitsui Chemicals, Inc.)
- Resin C: aromatic modified terpene resin (trade name: YS RESIN TO125, available from Yasuhara Chemical Co., Ltd.)
- Resin D: rosin-modified phenol (trade name: SUMILITERESIN PR-12603, available from Sumitomo Bakelite Co., Ltd.)
- Resin E: terpene phenol resin (trade name: YS POLYSTER T130, available from Yasuhara Chemical Co., Ltd.)
- Carbon black A: trade name: N330, available from NSCC Carbon Co., Ltd.
- Carbon black B: trade name: N326, available from NSCC Carbon Co., Ltd.
- Sulfur: trade name: oil-treated sulfur, available from Hosoi Chemical Industry Co., Ltd.
- Vulcanization accelerator A: sulfenamide-based vulcanization accelerator (trade name: NOCCELER CZ, available from Ouchi Shinko Chemical Industrial Co., Ltd.)
- Vulcanization accelerator B: thiazole-based vulcanization accelerator (trade name: NOCCELER 64, available from Ouchi Shinko Chemical Industrial Co., Ltd.)
- Rubber solvent (trade name: LA rubber solvent, available from JX Nippon Oil & Energy Corporation)

As is clear from Table 1, the rubber compositions and the cement compositions, which contained a predetermined amount of tackifying resin having a softening point of lower than 130°C relative to the amount of the diene rubber, showed excellent results in all the solubility evaluation, tackiness evaluation, and adhesion evaluation (Examples 1 to 6). On the other hand, both the cases where a tackifying resin having a softening point of higher than 130°C was used deteriorated the tackiness (Comparative Examples 1 and 2). It is conceived that this result was caused because the compatibility between the diene rubber which was a seed rubber and the tackifying resin decreased due to excessively high softening point of the tackifying resin, and thus the rubber solvent as the solvent and the rubber composition were not sufficiently mixed. Furthermore, the case where the compounded amount of the tackifying resin was excessively low, the tackiness deteriorated (Comparative Example 3).

### Reference Signs List

1 Marine hose
11 Hose body
12 Attaching member
13 Inner tube rubber layer
14 Pressure resistant cord layer
15 Buoyant material layer
151 Foamed member
152 Non-foamed material
16 Cover rubber layer
21 Flange
21a Bolt hole
23 Primer layer
24 Cement layer

## Claims

1. A rubber composition comprising:
100 parts by mass of a diene rubber,
from 5 parts by mass to 70 parts by mass of a carbon black, and
from 3 parts by mass to 50 parts by mass of a tackifying resin having a softening point of lower than 130°C.

2. The rubber composition according to claim 1, wherein the tackifying resin is at least one type selected from the group consisting of alkylphenol resins, petroleum resins, and aromatic modified terpene resins.

3. The rubber composition according to claim 1 or 2, wherein the diene rubber is a natural rubber.

4. The rubber composition according to any one of claims 1 to 3, further comprising a vulcanization accelerator.

5. A cement composition comprising the rubber composition described in any one of claims 1 to 4, and a solvent.

6. The cement composition according to claim 5, wherein a content of the rubber composition is from 5 mass% to 50 mass%, and a content of the solvent is from 50 mass% to 95 mass%.

7. A hose for liquid transportation comprising a hose body, and a foamed member fixed to a surface of the hose body with the cement composition described in claim 6.

8. The hose for liquid transportation according to claim 7, wherein the hose is a marine hose.
